# EUROPEAN PATENT APPLICATION

(11) **EP 2 042 990 A2**
(43) Date of publication of application: **01.04.2009**
(21) Application number: 08252338.2
(22) Date of filing: 09.07.2008
(51) Int. Cl.: G06F 9/54

(54) **Vendor independent proxy for self service**

(30) Priority: 13.07.2007 US 827866
(71) Applicant: NCR Corporation, Dayton, Ohio 45479 (US)
(72) Inventor: Aveyard, Carl A., Dewsbury, West Yorkshire (GB); Larham, Paul A., Surrey GU25 4RE (GB); Poole, Pamela M., Cowdenbeath Fife KY4 8AX (GB)
(74) Representative: MacLeod, Roderick William

(57) **Abstract**

A method of operating a self-service terminal and a self-service terminal are described. The self-service terminal comprises a proxy that is arranged to intercept messages between a self-service terminal application and a self-service host application which meet defined criteria. The intercepted messages are then optionally modified and redirected to an alternative destination. This enables new functionality and transactions to be added to the self-service terminal.

## Description

The present invention relates to a message proxy. It is particularly related to, but in no way limited to, a message proxy for handling messages in an automated teller machine (ATM) or self-service kiosk.

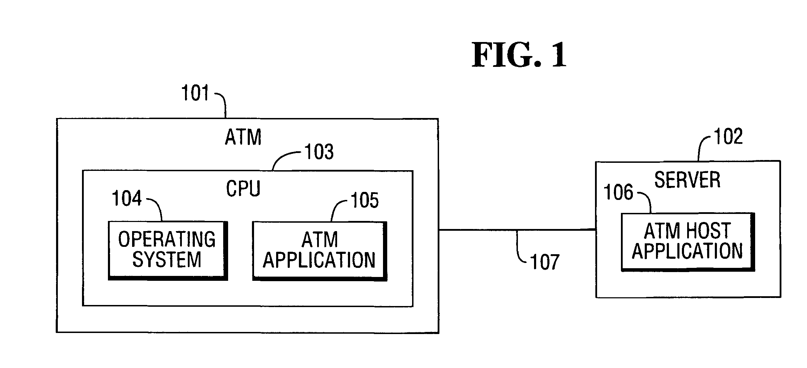

Figure 1 shows a schematic diagram of a traditional ATM architecture in which an ATM 101 is connected to a server 102. The ATM 101 includes a central processing unit (CPU) 103 on which an operating system 104 and an ATM application 105 run. The operating system is typically Windows XP (trade mark), although other operating systems such as Linux may be used. The ATM application is a custom application, generally developed by the manufacturer of the ATM. Examples of ATM applications include Aptra Advance NDC (NCR Direct Connect) developed by NCR and applications developed by Wincor Nixdorf, Phoenix and KAL. The ATM application 105 communicates with an ATM host application (or system) 106 which runs on the server 102. The ATM host application 106 is typically a payment and transaction system such as ACI Base24 (from Applied Communications, Inc) or S1 I Postillion (from S1 Corporation). The ATM and the server may be connected using a communication channel 107, including but not limited to a LAN, WAN, modem dial up, GPRS etc.

The ATM application 105 controls the operation and functionality of the ATM, including rendering the graphical user interface (GUI) which is displayed on the display of the ATM (not shown in figure 1) and in order to add new functions to the ATM changes are required to either the ATM application or the ATM host application or both. This results in the ATM functionality being inflexible and prevents frequent changes. Where the ATM application is third party software, it may not be possible to make changes and in these circumstances, changes to the functionality of the ATM may, therefore, not be possible.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A method of operating a self-service terminal and a self-service terminal are described. The self-service terminal comprises a proxy that is arranged to intercept messages between a self-service terminal application and a self-service host application which meet defined criteria. The intercepted messages are optionally modified and then redirected to an alternative destination. This enables new functionality and transactions to be added to the self-service terminal.

A first aspect provides a method of operating a self-service terminal comprising: using a proxy to intercept a message between a self-service terminal application and a self-service host application which meets defined criteria; and sending a message to an alternative destination. This enables the introduction of new transactions and / or functionality to the self-service terminal without requiring a change in the existing self-service application or the self-service host application. This allows a modular approach to design and / or provides a low cost and flexible means of upgrading the self-service terminal.

In an embodiment said intercepted message and said message sent to an alternative destination are the same. In another embodiment, the sent message may be a modified version of the intercepted message.

Preferably said self-service terminal application runs on a processor in said self-service terminal and wherein said self-service host application runs on a remote server.

Preferably said proxy runs on said processor. This ensures that the proxy is running in a secure location.

Preferably said self-service terminal is an automated teller machine or a kiosk.

Preferably said alternative destination comprises a module arranged to provide additional functionality to said self-service terminal. This allows additional functionality to be added in a modular manner, with each module being individually tested. Individual modules may be operated by different providers, depending on the functionality being provided.

Preferably said module comprises an application running on said self-service terminal or on a remote server.

The method may further comprise: receiving, at said proxy, a message from said alternative destination; and sending a message to at least one of said self-service terminal application and said self-service host application.

In an embodiment said message received from said alternative destination and said message sent to at least one of said self-service terminal application and said self-service host application are the same. In another embodiment the sent message may be a modified version of the received message.

The method may further comprise: receiving, at said proxy, a message from said alternative destination; and sending a message to a peripheral device associated with said self-service terminal. This enables the self-service terminal application to operate with upgraded / new peripherals which the application does not itself directly support.

In an embodiment said message received from said alternative destination and said message sent to a peripheral device are the same. In another embodiment the sent message may be a modified version of the received message.

The method may further comprise: if said message between said self-service terminal application and said self-service host application originated at said self-service terminal application, sending a message to said self-service host application; and if said message between said self-service terminal application and said self-service host application originated at said self-service host application, forwarding said message to said self-service terminal application. This enables the existing transaction flow to continue uninterrupted whilst additional operations may be performed in parallel.

Preferably said defined criteria comprise at least one of: card number, card issuing entity, transaction type, time of day, error message or other data based criteria. This enables different criteria to be defined dependent upon the additional functionality being introduced. Preferably said message uses a standard communication protocol. This enables the proxy to communicate with any self-service terminal application or self-service host application irrespective of the protocols used within each application and irrespective of the developer of that application. Upgrades / additional functionality may then be added to a self-service terminal even if provided by a third party and even if it uses third-party proprietary protocols within the terminal.

A second aspect provides a self-service terminal comprising: a processor arranged to run a self-service terminal application; a connection to a remote host application; and a proxy arranged to run on said processor, wherein said proxy is arranged to: intercept a message between said self-service terminal application and said host application which meets defined criteria; and send a message to an alternative destination.

In an embodiment the intercepted message and the sent message are the same. In another embodiment the sent message is a modified reason of the intercepted message.

Preferably said alternative destination comprises a module arranged to provide additional functionality to said self-service terminal.

Preferably said module comprises an application running on said self-service terminal or an application running on a remote server.

Said proxy may be further arranged to: receive a message from said alternative destination; and send a message to at least one of said self-service terminal application and said host application.

In an embodiment said message received from said alternative destination and said message sent to at least one of said self-service terminal application and said host application are the same.

Said self-service terminal may further comprise a peripheral device and said proxy may be further arranged to: receive a message from said alternative destination; and send a message to said peripheral device.

In an embodiment the received message and the sent message are the same. In another embodiment the sent message is a modified version of the sent message.

Said proxy may be further arranged to: if said message between said self-service terminal application and said host application originated at said self-service terminal application, to send a message to said host application; and if said message between said self-service terminal application and said host application originated at said host application, to send a message to said self-service terminal application.

In an embodiment the received message and the sent message are the same. In another embodiment the sent message is a modified version of the sent message.

Preferably said defined criteria comprise at least one of: card number, card issuing entity, transaction type, time of day, error message or other data based criteria.

Many of the attendant features will be more readily appreciated as the same becomes better understood by reference to the following detailed description considered in connection with the accompanying drawings. The preferred features may be combined as appropriate, as would be apparent to a skilled person, and may be combined with any of the aspects of the invention.

Embodiments of the invention will be described, by way of example, with reference to the following drawings, in which:
Figure 1 is a schematic diagram of a traditional ATM architecture;
Figure 2 is a schematic diagram of an improved ATM architecture; and
Figures 3-7 are example flow diagrams showing the operation of the proxy.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved.

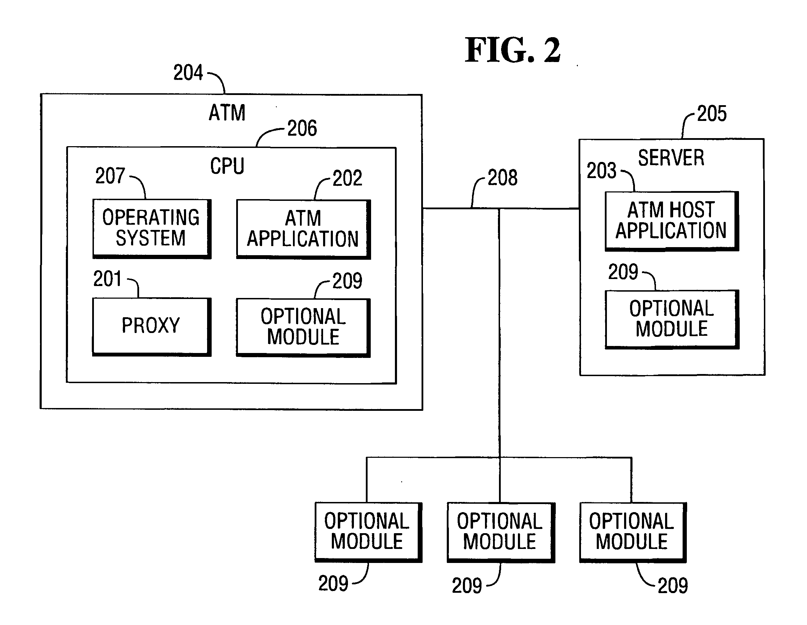

Figure 2 shows a schematic diagram of an improved ATM architecture which includes a proxy 201 referred to herein as a Multi Vendor Host Message Proxy (MVHMP) or Vendor Independent Proxy for Self Service Terminals (VIPSST). Use of the proxy, as described below, enables the introduction of new transactions and / or functionality to the ATM without requiring a change in the existing ATM application 202 or the transaction management host system 203 with which the ATM application interacts. The new functionality may be introduced when the ATM is initially deployed or alternatively, the proxy may be used to enable upgrading of the ATM functionality. Use of the proxy also enables a modular approach to the ATM architecture, with different modules providing different aspects of the ATM functionality and service. The proxy is referred to as 'multi vendor' or 'vendor independent' because it can run across multiple ATM vendors' hardware.

Figure 2 shows an ATM 204 connected to a server 205 by a leased line 208 or other means (e.g. dial-up connection). The ATM 204 includes a CPU 206 on which an operating system 207, the ATM application 202 and the proxy 201 run. The operating system 207 may be Windows XP (trade mark), Vista (trade mark), Linux or any other suitable operating system. The ATM application 202 may be a custom application, which may be developed by the manufacturer of the ATM or a third party. Examples of ATM applications include Aptra Advance NDC (NCR Direct Connect) developed by NCR and applications developed by Wincor Nixdorf, Phoenix and KAL. The proxy 201 may be a Windows XP application (where the operating system is Windows XP) and is described in more detail below. The server 205 runs an ATM host application (or system) 203. The ATM host application 203 may be a payment and transaction system such as ACI Base24 (from Applied Communications, Inc) or S 1 Postillion (from S 1 Corporation). The architecture also includes one or more optional modules which may run on the ATM's CPU 206, the server 205 and / or elsewhere (e.g. on a web server). These optional modules 209 provide additional functionality to the ATM and communicate with the proxy 201. Examples of optional modules include:
A local ATM application, which may for example provide a personal loan illustration for a user of the ATM
A local ATM application, which may for example, operate as the ATM host application, within certain limits, should the network connections to the ATM fail
An application running on a web server (e.g. an intranet web server connected to the same network as the ATM), which may for example enable a user of the ATM to take out a personal loan at the ATM
Internet services, which may for example enable a user of the ATM to purchase cinema or train tickets or to top up their mobile phone pre-pay account
An advertising application, which may run on the ATM's CPU or remotely, which inserts adverts, which may be tailored to the user of the ATM or the actions of the user, into the standard GUI displayed on the ATM
Collection of pre-approved funds or media without the need to access the original
ATM host
Dynamic Currency Conversion - where the Proxy accesses a 2^{nd} system to determine if DCC can be offered and presents an alternate billing option
Card less transaction (mobile phone cash) where the ATM does not need a card to activate the transaction.

In other examples, the optional modules may not provide a service to the user but instead the additional functionality may not be visible to the user but may assist in the operation of the ATM network, for example, by updating a database (not shown in figure 1), sending a message to a server etc.

The proxy, in combination with one or more optional modules, may be arranged to provide a configurable host simulation system that can be used to completely drive the ATM instead of using the ATM application. In this example, the proxy acts as a gateway between multiple host systems, one of which is resident on the ATM. This may be beneficial if the main remote host is unavailable, because the proxy can detect this and refer all transaction requests to the local host. In another example, the proxy may be used to selectively control specific new transactions whilst allowing the standard ATM application to operate the traditional transactions. The proxy may be arranged to inject new transaction flow into the ATM application, thereby exploiting the existing functionality of the ATM application. This may provide a commercial benefit. In a further example, the proxy may be arranged to run a new transaction flow which circumvents some or all of the operation of the ATM application. In other examples, the proxy may be arranged to override and change screen display definitions for the ATM. This may be achieved by the ATM application rendering the GUI for display or alternatively the proxy may provide signals direct to the display on the ATM.

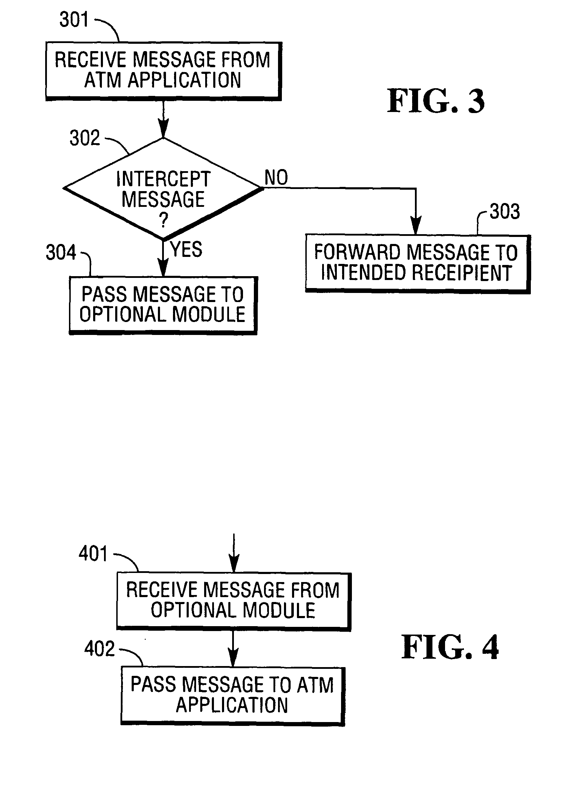

The operation of the Vendor Independent Proxy for Self-Service Terminal or MVHMP can be described with reference to figure 3 which shows an example flow diagram in which the proxy receives a message from the ATM application (block 301). The proxy analyses the message to determine whether the message is to be intercepted or not (block 302). If the message is not to be intercepted, it is forwarded to the original recipient ("No" in block 302, followed by block 303). If the message is to be intercepted, the proxy sends a message to an optional module ("Yes" in block 302, followed by block 304).

The proxy may be arranged to receive (in block 301) all the data output by the ATM application or only messages which are intended for the ATM host application. The analysis of the message (block 302) may be based on defined criteria or in some applications all messages may be intercepted. Criteria may include one or more of the following: card number, card issuer, transaction type, time of day, error messages (see failure mode example described below with reference to figure 4) or other data based criteria as configured for the self-service terminal. The analysis may also include the determination of the optional module (or modules) to which a message should be sent (in block 304), particularly where the architecture includes more than one optional module (as shown in figure 2). The message passed to the optional module (in block 304) may be the same as the message that was received from the ATM application (in block 301) or the proxy may modify the message or generate a new message to send to the optional module.

The proxy 201 communicates with the ATM application, the ATM host application 203 and the optional modules 209, as required, at a standard protocol level rather than an application level protocol. Therefore the proxy can communicate with any ATM application or ATM host application irrespective of the protocols used within each application and irrespective of the developer of that application. In many examples, the proxy communicates with the ATM application and ATM host (if necessary) using a standard protocol for communication across a network, such as TCP/IP or X.25. In other examples, any suitable standard protocol may be used.

Having passed the message to the optional module (in block 304), the subsequent operation of the proxy and the ATM as a whole will depend upon the functionality introduced by the particular optional module and a number of different examples are shown in figures 4-7 and described below.

In a first example, as shown in figure 4, the proxy may receive a message from the optional module (block 401) and then pass a message back to the ATM application (block 402). Such a method may be used where the optional module is arranged to operate as the ATM host application when the network connection to the ATM fails or the server fails. This optional module, located within the ATM itself, enables the ATM to continue to function in such a failure situation. There may be limits within which the optional module can operate (e.g. a defined maximum cash withdrawal by any customer) in this situation and the functionality of the ATM may be reduced (e.g. balance enquiries may not be possible). In such an example, the message provided by the optional module and passed to the ATM application (in block 402) may simulate a message from the ATM host application, such that the ATM application operates as normal, without any awareness that the failure has occurred. In such circumstances, the optional module may log all the transactions made during the period of network / host failure so that records can subsequently be updated.

The method shown in figures 3 and 4 may be used to provide a new transaction, such as withdrawal of foreign currency or the facility to add credit to a mobile telephone pre-pay account (also referred to as mobile phone 'top-up'), which may be managed by an optional module which is located remotely from the ATM. In an example, the foreign currency transaction system may be a non-NDC application. In another example, where the new transaction is the ability to add credit to an existing pre-pay mobile telephone account, the optional module may be the mobile phone operator's transaction system or an interface to such a system. Where the service is offered for multiple mobile phone operators, multiple optional modules may be available, one for each operator. To provide such a new transaction, the proxy intercepts the message ("Yes" in block 302) if it identifies that the message relates or identifies the new transaction, and where multiple optional modules are available, the proxy selects the optional module which relates to the particular new transaction identified in the message. A message is then sent to the optional module (in block 304) and the optional module responds with one or more messages relating to the new transaction (received by the proxy in block 401). Messages to implement the new transaction are passed by the proxy to the ATM application (block 402).

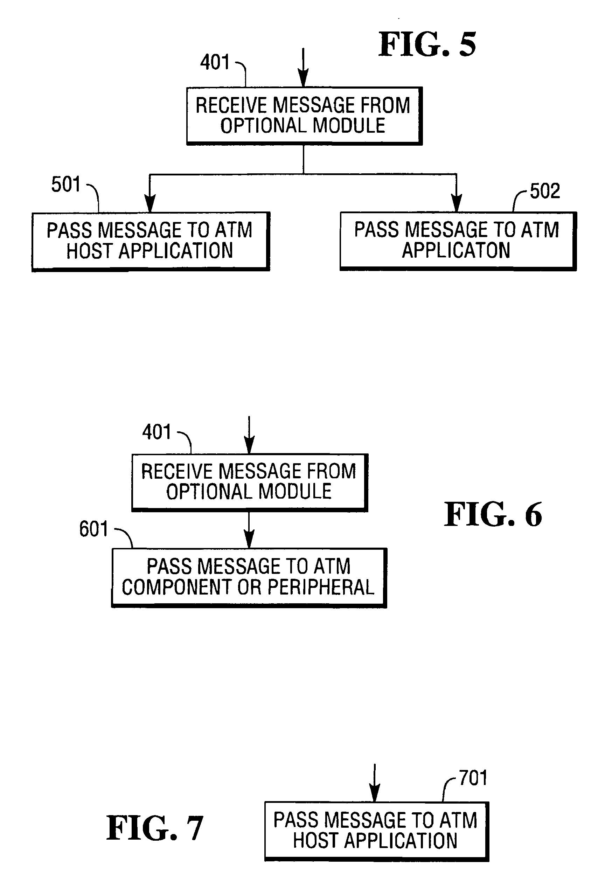

In a second example of the subsequent operation of the proxy (following from figure 3), as shown in figure 5, the proxy may receive a message from the optional module (block 401) and then pass a message to the ATM host application (block 501). This message passed to the ATM host application (in block 501) may be the same as the message received by the proxy (in block 301) or may be different. A message may also be passed to the ATM application (block 502). Such a method may be used to inject additional steps into an existing transaction flow, for example currency conversion information or an on-screen advert. It will be appreciated that the order of the steps shown in figures 3 and 5 (and also figures 4, 6 and 7) are by way of example only and the steps may be performed in different orders and / or substantially simultaneously. For example, the proxy may pass a message to the optional module (in block 301) and pass a message to the ATM host application (in block 501) substantially simultaneously.

In a dynamic currency conversion example, an optional module may be provided to provide currency conversion information to a card holder whose card was issued in a different country. The proxy may decide that the message should be intercepted (in block 302) based on the card number because the card number identifies the issuing authority / country as being in another country. The proxy passes a message to the dynamic currency conversion optional module (block 304) and receives a response (block 401), which may include currency conversion information. The original message received (in block 301) may be passed to the ATM host application (block 501) so that the standard transaction takes place, but a message may also be sent to the ATM application (block 502) so that the currency conversion information can be displayed to the user of the ATM (i.e. to the foreign card holder). In a similar manner, an optional module may be introduced to provide support for additional languages within the GUI of the ATM. Where the card number identifies the card holder as being from a country having a native language which is not supported by the ATM application, data to provide a GUI in an appropriate language may be obtained from an optional module (in steps 304, 401 and 502).

In an advertising example, the optional module may provide adverts to be displayed on the screen of the ATM whilst the transaction is being processed (e.g. instead of a "please wait" screen). In this example, the proxy may intercept messages for all card holders or only a subset of card holders (e.g. those cards issued by a particular entity) and pass a message to the advert supplying optional module (block 304). As a result of the message received back from the optional module (in block 401), a message may be sent to the ATM application (in block 502) to cause the insertion of an advert into the ATM GUI at a suitable point in the transaction flow. The intercepted message may, in parallel, be forwarded to the ATM host application (block 501) such that the standard transaction flow can continue. In further advertising examples, the proxy may send messages to different optional modules (in block 304) dependent upon certain criteria (e.g. the card issuer) such that the adverts may be tailored to the card holder (e.g. adverts displayed which relate to products offered by the card issuer).

In a third example of the subsequent operation of the proxy (following from figure 3), as shown in figure 6, the proxy may receive a message from the optional module (block 401) and then pass a message to an ATM component or peripheral (block 601). In some examples, the received message may also be passed to the ATM host application or a message may be passed to the ATM application (not shown in figure 6). Such a method may be used where a new peripheral or component, such as a new printer, is added to the ATM and which is not supported by the ATM application (and / or ATM host application). In such an example, the proxy determines that the message is intended for a particular peripheral (e.g. a printer) and intercepts it because the peripheral has been changed. The message is passed to the optional module (in block 304) which may comprise a driver for the new peripheral. A message received from the optional module (in block 401) may comprise the executable instructions for the new peripheral and these are passed to the new peripheral (in block 601) so that it can perform the expected operation (e.g. to print a statement). In this example, the ATM application is unaware that the peripheral has been upgraded and whilst it cannot communicate directly with the new peripheral, the optional module provides the required translations to messages. If the ATM application expects an acknowledgement from the peripheral (e.g. a message confirming that printing has been successful), the proxy may subsequently receive this message from the new peripheral and pass it to the ATM application (not shown in figure 6). Where the message from the new peripheral requires translation before sending to the ATM application, the message may be sent to the optional module (or another optional module) and the response from that optional module sent to the ATM application instead.

In a fourth example of the subsequent operation of the proxy (following from figure 3), as shown in figure 7, the proxy may pass the message to the ATM host application (block 701) without awaiting a response from the optional module. Such a method may be used where the optional module is providing a monitoring or recording function without affecting the actual message flow or operation of the ATM.

It will be appreciated that there are many other examples of the operation of the proxy and aspects of any of the four examples described above and shown in figures 4-7 may be combined in any way and method steps may be performed in alternative sequences and / or substantially simultaneously. It will further be appreciated that steps or sequences of steps shown in any of the flow diagrams may be repeated as required. In an example, where an optional module is used to provide advertisements for insertion into the GUI of the ATM (as described above with reference to figures 3 and 5), multiple messages may be provided to the ATM application (by repeating block 502) to provide multiple adverts where the processing time for the transaction (and therefore the period of time for which a "please wait" screen might otherwise be displayed) is considerable.

The modular approach using a proxy, as described herein, enables the functionality of an ATM to be changed rapidly and at low cost (e.g. it is not necessary to rewrite the ATM application or the ATM host application). Additionally, this approach may reduce certification time because each additional element of functionality (as provided by an optional module operating in conjunction with the proxy) can be separately tested. Each module can also handle the security considerations for the particular functionality it provides.

This enables differing levels of security provision depending on the functionality. In some examples there may be very low levels of security required, for example, where an optional module is used to provide advertising or other material to be displayed on the screen when the ATM is not in use. In such a situation, it is not necessary to perform any card authentication.

Whilst in figure 2 the proxy 201 is shown located on the ATM's CPU 206, in other examples, the proxy may be located elsewhere, such as on the server 205 or on another server (not shown in figure 2). Dependent upon the location of the proxy, there may be different security requirements to prevent tampering with the proxy and / or introduction of malicious additional modules. By running the proxy on the ATM itself or on the server with the ATM host application, the proxy is running in a secure location and therefore security concerns may be minimized.

Although the above description and figures refers to the implementation of the proxy in an ATM, the proxy may also be used in any other form of self-service terminal or kiosk so as to enable the introduction of additional functionality without requiring a change to the existing kiosk / terminal application or the existing transaction / management host application with which the kiosk / terminal interacts.

Any range or device value given herein may be extended or altered without losing the effect sought, as will be apparent to the skilled person. Any features from any example shown in the figures or described above may be combined in any way with other features shown or described in the same or other examples.

The steps of the methods described herein may be carried out in any suitable order, or simultaneously where appropriate.

It will be understood that the benefits and advantages described above may relate to one embodiment or may relate to several embodiments. It will further be understood that reference to 'an' item refer to one or more of those items.

It will be understood that the above description of a preferred embodiment is given by way of example only and that various modifications may be made by those skilled in the art. The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the scope of this invention.

## Claims

1. A method of operating a self-service terminal comprising:
using a proxy to intercept a message between a self-service terminal application and a self-service host application which meets defined criteria; and
sending a message to an alternative destination.

2. A method according to claim 1, wherein said intercepted message and said message sent to an alternative destination are the same.

3. A method according to claim 1, wherein said self-service terminal application runs on a processor in said self-service terminal and wherein said self-service host application runs on a remote server.

4. A method according to claim 3, wherein said proxy runs on said processor.

5. A method according to claim 1, wherein said self-service terminal is one of an automated teller machine and a kiosk.

6. A method according to claim 1, wherein said alternative destination comprises a module arranged to provide additional functionality to said self-service terminal.

7. A method according to claim 6, wherein said module comprises an application running on one of said self-service terminal and a remote server.

8. A method according to claim 1, further comprising:
receiving, at said proxy, a message from said alternative destination; and
sending a message to at least one of said self-service terminal application and said self-service host application.

9. A method according to claim 8, wherein said message received from said alternative destination and said message sent to at least one of said self-service terminal application and said self-service host application are the same.

10. A method according to claim 1, further comprising:
receiving, at said proxy, a message from said alternative destination; and
sending a message to a peripheral device associated with said self-service terminal.

11. A self-service terminal comprising:
a processor arranged to run a self-service terminal application;
a connection to a remote host application; and
a proxy arranged to run on said processor, wherein said proxy is arranged to: intercept a message between said self-service terminal application and said host application which meets defined criteria; and
send a message to an alternative destination.

12. A self-service terminal according to claim 11, wherein said intercepted message and said message sent to an alternative destination are the same.

13. A self-service terminal according to claim 11 or claim 12, wherein said alternative destination comprises a module arranged to provide additional functionality to said self-service terminal.

14. A self-service terminal according to claim 13, wherein said module comprises an application running on one of said self-service terminal and a remote server.

15. A self-service terminal according to any of claims 11 to 14, wherein said proxy is further arranged to:
receive a message from said alternative destination; and
send a message to at least one of said self-service terminal application and said host application.
